# EUROPEAN PATENT SPECIFICATION

(11) **EP 4 475 250 B1**
(45) Date of publication and mention of the grant of the patent: **09.09.2026**
(21) Application number: 24179475.9
(22) Date of filing: 03.06.2024
(51) Int. Cl.: H01M 10/052, H01M 10/0567, H01M 10/0525, H01M 10/0569, H01M 10/42

(54) **ELECTROLYTE FOR RECHARGEABLE LITHIUM BATTERY AND RECHARGEABLE LITHIUM BATTERY INCLUDING THE SAME**
ELEKTROLYT FÜR EINE WIEDERAUFLADBARE LITHIUMBATTERIE UND WIEDERAUFLADBARE LITHIUMBATTERIE DAMIT
ÉLECTROLYTE POUR BATTERIE AU LITHIUM RECHARGEABLE ET BATTERIE AU LITHIUM RECHARGEABLE LE COMPRENANT

(30) Priority: 08.06.2023 KR 20230073477
(43) Date of publication of application: 11.12.2024
(73) Proprietor: Samsung SDI Co., Ltd., Yongin-si, Gyeonggi-do 17084 (KR)
(72) Inventor: Sim, Minji, 17084 Yongin-si, Gyeonggi-do (KR); Lee, Tae Jin, 17084 Yongin-si, Gyeonggi-do (KR); Cha, Si-Young, 17084 Yongin-si, Gyeonggi-do (KR); Kang, Inah, 17084 Yongin-si, Gyeonggi-do (KR); Jeong, Hanmam, 17084 Yongin-si, Gyeonggi-do (KR)
(74) Representative: Gulde & Partner

(56) References cited:
- WO-A1-2020/126343
- KR-A- 20140 089 450
- KR-A- 20220 062 203

## Description

### BACKGROUND

### 1. Field

One or more aspects of embodiments of this disclosure are directed toward an electrolyte for a rechargeable lithium battery and a rechargeable lithium battery including the same.

### 2. Description of the Related Art

A rechargeable lithium battery may be recharged and has at least three or more times higher energy density per unit weight than a lead storage battery, nickelcadmium battery, nickel hydrogen battery, nickel zinc battery and/or the like. It may be also charged at a relatively high rate and thus, is commercially manufactured for laptops, cell phones, electric tools, electric bikes, electric vehicles, and/or the like, and research on further improvement of energy density is being actively pursued.

Such a rechargeable lithium battery may be manufactured by injecting an electrolyte into an electrode assembly, which includes a positive electrode including a positive electrode active material capable of intercalating/deintercalating lithium ions and a negative electrode including a negative electrode active material capable of intercalating/deintercalating lithium ions. For example, KR 2014 0089450 A discloses a modified lithium metal electrode, wherein the modification of a lithium metal includes a step of coating the lithium metal with a polymer gel precursor solution in which an amine curing agent, an epoxy compound and an organic electrolyte solution are mixed, and then curing.

Recently, one of development directions for rechargeable lithium batteries has been in improvement of high-temperature characteristics. In related art, the rechargeable lithium batteries may have problems such as increase in resistance at a high temperature, ignition and/or explosion. For example, in a module and/or a pack formed by assembling several rechargeable lithium battery cells, if one of the rechargeable lithium battery cells starts to ignite and/or explode, heat may spread to its adjacent cells in succession, thus risking a possible ignition and/or explosion of the entire module and/or pack.

### SUMMARY

The invention is defined by the appended claims. The description that follows is subjected to this limitation. Any disclosure lying outside the scope of said claims is only intended for illustrative as well as comparative purposes. According to one or more aspects of embodiments of the present disclosure, the electrolyte for a rechargeable lithium battery may suppress or reduce the risk of ignition and/or explosion of a battery cell at high temperature and may prevent or reduce temperature increase in the battery cell even if ignition and/or explosion begins in an adjacent cell. Additional aspects will be set forth in part in the description which follows and, in part, will be apparent from the description, or may be learned by practice of the presented embodiments of the disclosure.

According to the present invention, an electrolyte for a rechargeable lithium battery includes a non-aqueous organic solvent; a lithium salt; a first additive represented by Chemical Formula 1; and a second additive being a nitrile-based additive:

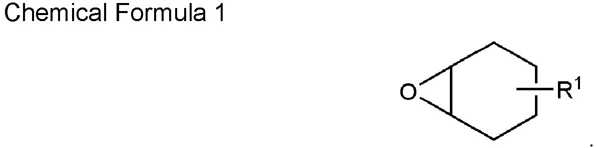

Some embodiments provide a rechargeable lithium battery including a positive electrode including a positive electrode active material; a negative electrode including a negative electrode active material; and the electrolyte according to the present embodiments.

The rechargeable lithium battery according to one or more embodiments of the present disclosure is capable of suppressing or reducing ignition and/or explosion of the battery cell at high temperatures by combining the two types (kinds) of additives according to the present embodiments, and may prevent or reduce the increase in temperature of the battery cell even if ignition and/or explosion begins in an adjacent battery cell.

### BRIEF DESCRIPTION OF THE DRAWINGS

FIG. 1 is a schematic view showing a rechargeable lithium battery according to some embodiments.
FIGs. 2-6 each illustrate a graph showing the heat exposure evaluation results of the rechargeable lithium battery cells of Comparative Examples 1, 2, and 4, and Examples 1 and 2 if exposed to heat at 138 °C, respectively.
FIGs. 7-11 each illustrate a graph showing the heat exposure evaluation results of the rechargeable lithium battery cells of Comparative Examples 1, 2, and 4, and Examples 1 and 2 if exposed to heat at 141 °C, respectively.

### DETAILED DESCRIPTION

Hereinafter, a rechargeable lithium battery according to some embodiments will be described in more detail with reference to the accompanying drawings.

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the singular forms "a," "an," and "the" are intended to include the plural forms as well, unless the context clearly indicates otherwise.

It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

It will be understood that when an element is referred to as being "on," "connected to," or "coupled to" another element, it may be directly on, connected, or coupled to the other element or one or more intervening elements may also be present. When an element is referred to as being "directly on," "directly connected to," or "directly coupled to" another element, there are no intervening elements present.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

As utilized herein, if specific definition is not otherwise provided, "substituted" refers to replacement of at least one hydrogen of a compound by a halogen atom (F, Cl, Br, and/or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and/or any suitable combination thereof.

As utilized herein, if specific definition is not otherwise provided, "heterocycloalkyl group", "heterocycloalkenyl group", "heterocycloalkynyl group," and "heterocycloalkylene group" refer to presence of at least one N, O, S, or P in a cyclic compound of cycloalkyl, cycloalkenyl, cycloalkynyl, and cycloalkylene.

In the chemical formula of the present specification, unless a specific definition is otherwise provided, hydrogen is bonded at the position if a chemical bond is not drawn where supposed to be given.

As utilized herein, if a definition is not otherwise provided, " * " refers to a linking part (e.g., a binding site) between the same or different atoms, and/or chemical formulae.

### Electrolyte

The present invention provides an electrolyte for a rechargeable lithium battery including a non-aqueous organic solvent; a lithium salt; a first additive represented by Chemical Formula 1; and a second nitrile-based additive:

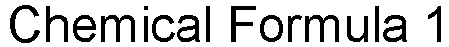

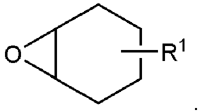

Without being bound by any particular theory, it is believed that the first additive may have the effect of (e.g., may facilitate) gelling the electrolyte due to an epoxy group, through a mechanism in which the epoxy group is ring-opened at a high temperature of around 100 °C and a substantially continuous polymerization reaction occurs between different first additives.

Without being bound by any particular theory, it is believed that the second additive has an effect of (e.g., may facilitate) gelling the electrolyte at a high temperature exceeding about 138 °C due to a nitrile group.

Accordingly, compared to an electrolyte including either only the first additive or only the second additive, the electrolyte including both the first additive and the second additive may rapidly or suitably increase the viscosity of the electrolyte at a high temperature exceeding about 138 °C and at the same time (e.g., concurrently), it may drastically or suitably reduce ionic conductivity and shut down the rechargeable lithium battery cell.

Accordingly, a rechargeable lithium battery to which the electrolyte for a rechargeable lithium battery of some embodiments is applied can suppress or reduce ignition and/or explosion of the cell at high temperature by a combination of the two types (kinds) of additives of the present embodiments, and even if ignition and/or explosion starts in an adjacent cell, the temperature increases in the cell including the electrolyte can be prevented or reduced.

Hereinafter, an electrolyte for a rechargeable lithium battery of some embodiments will be described in more detail.

### First Additive

The description of Chemical Formula 1 representing the first additive is as follows:
In Chemical Formula 1, R¹ is a C1 to C10 alkyl group, a C3 to C10 cycloalkyl group, a C2 to C20 heterocycloalkyl group including a heteroatom of N, O, S, and/or P, a substituted or unsubstituted C6 to C20 aryl group, a substituted or unsubstituted C2 to C10 heteroaryl group including a heteroatom of N, O, S, and/or P, or *-(L¹)-(L²)-R².

In some embodiments, R¹ may be *-(L¹)-(L²)-R²; wherein L¹ is *-(C=O)-O-*; L² is a C1 to C10 alkylene group; and R² is hydrogen or a substituent represented by Chemical Formula A:

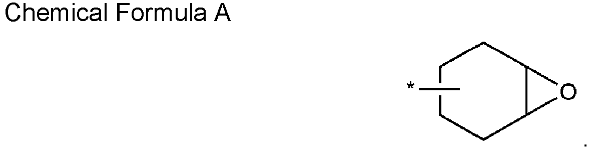

In some embodiments, Chemical Formula 1 may be represented by Chemical Formula 1-1 or Chemical Formula 1-2: 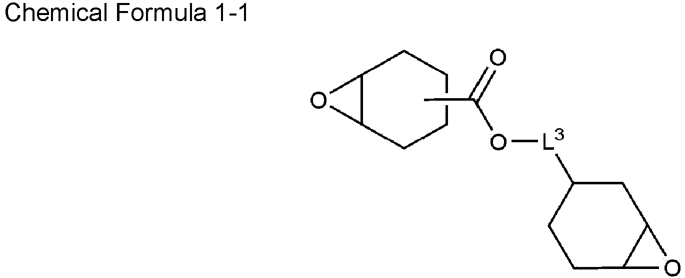 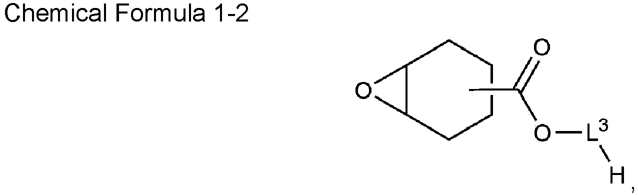 wherein, in Chemical Formulae 1-1 and 1-2, L³ is a C1 to C10 alkylene group.

Representative examples of the first additive are as follows:

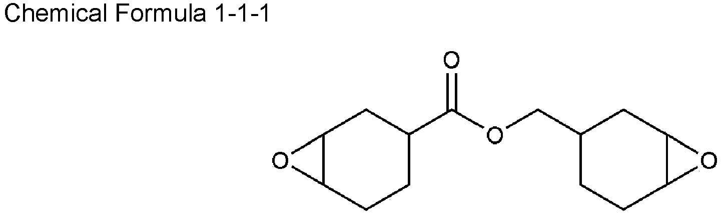

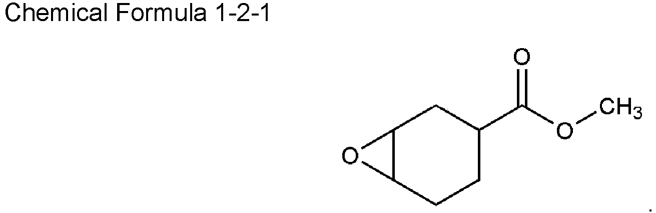

### Second Additive

The second additive may include one or more types of multifunctional nitrile compounds including two or more nitrile groups.

As the "multifunctional nitrile compound including two or more nitrile groups," the second additive may be represented by Chemical Formula 2:

Chemical Formula 2 NC-(L³)ₐ-(L⁴)_{b}-CN,

wherein, in Chemical Formula 2, L³ and L⁴ are each independently be an unsubstituted C1 to C10 alkoxy group, an unsubstituted C1 to C10 alkylene group, or a C1 to C10 alkylene group substituted with a cyano group (-CN); and a and b are each independently be integers in a range of 0 to 3.

In some embodiments, Chemical Formula 2 may be represented by Chemical Formulae 2-1 or 2-2:

Chemical Formula 2-1 NC-(L⁵)_{c}-(L⁶)_{d}-CN

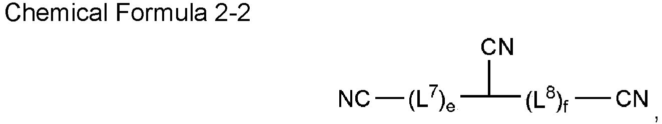

wherein, in Chemical Formulae 2-1 and 2-2, L⁵ to L⁸ are each independently be an unsubstituted C1 to C10 alkoxy group, or an unsubstituted C1 to C10 alkylene group; and c to f are each independently be an integer in a range of 0 to 3.

Representative examples of the second additive are as follows:

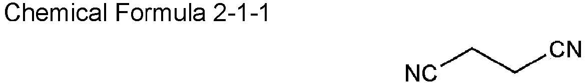

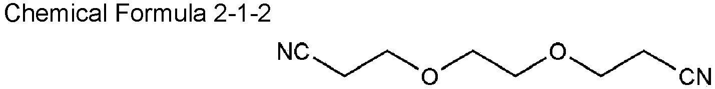

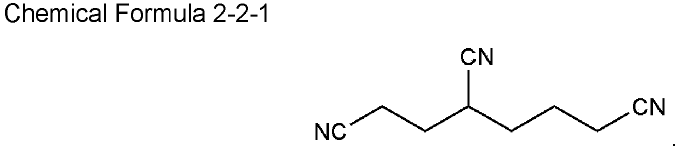

### Weight Ratio of First Additive and Second Additive

In some embodiments, a weight ratio of the first additive and the second additive may be about 1:1 to about 20:1. Within this range, there is believed to be a synergistic effect due to the combination of the above two types (kinds) of additives.

In some embodiments, the weight ratio of the first additive and the second additive may be about 2:1 to about 10:1.

### Content of Each Additive

In some embodiments, the first additive may be included in an amount of about 1 to about 20 wt% based on a total amount of the electrolyte. Within this range, the effect of the first additive may be increased.

In some embodiments, the first additive may be included in an amount of about 5 to about 10 wt% based on a total amount of the electrolyte.

In some embodiments, the second additive may be included in an amount of about 0.1 to about 10 wt% based on a total amount of the electrolyte. Within this range, the effect of the second additive may be increased.

In some embodiments, the second additive may be included in an amount of about 1 to about 5 wt% based on a total amount of the electrolyte.

### Non-aqueous Organic Solvent

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, t-butyl acetate, methylpropionate, ethylpropionate, propylpropionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. The ketone-based solvent may include cyclohexanone and/or the like. The alcohol-based solvent may include ethyl alcohol, isopropyl alcohol, and/or the like, the aprotic solvent may include nitriles (such as R-CN (wherein R is a C2 to C20 linear, branched, or cyclic hydrocarbon group, a double bond, an aromatic ring, or an ether bond)), amides (such as dimethylformamide), dioxolanes (such as 1,3-dioxolane), sulfolanes, and/or the like.

The non-aqueous organic solvent may be utilized alone or in combination with one or more of them, and if utilized in combination with one or more, a mixing ratio may be appropriately or suitably adjusted according to the desired or suitable battery performance, which is well understood by those skilled in the art.

The carbonate-based solvent is prepared by mixing a cyclic carbonate and a chain (e.g., linear) carbonate. The cyclic carbonate and chain carbonate are mixed together in a volume ratio of about 5:95 to about 50:50. When the mixture is utilized as an electrolyte, it may have enhanced performance.

In some embodiments, the non-aqueous organic solvent may include a carbonate-based solvent, an ester-based solvent, and/or any suitable combination thereof.

In some embodiments, the non-aqueous organic solvent may include ethylene carbonate (EC), propylene carbonate (PC), ethyl propionate (EP), and/or propyl propionate (PP). In this case, the performance of the electrolyte may be improved.

### Lithium Salt

The lithium salt may be dissolved in a non-aqueous organic solvent, may supply a battery with lithium ions, may facilitate the basic operation of the rechargeable lithium battery, and may improve transportation of the lithium ions between positive and negative electrodes. Examples of the lithium salt may include at least one selected from among LiPF₆, LiBF₄, LiDFOP, LiDFOB, LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), wherein x and y are natural numbers, for example, integers from 1 to 20, LiCl, Lil, and LiB(C₂O₄)₂ (lithium bis(oxalate) borate: LiBOB). A concentration of the lithium salt may be utilized within the range of about 0.1 M to about 2.0 M. When the concentration of the lithium salt is within the above range, the electrolyte has appropriate or suitable conductivity and viscosity, and thus excellent or suitable electrolyte performance can be exhibited, and lithium ions can move effectively or suitably.

### Rechargeable Lithium Battery

In some embodiments, a rechargeable lithium battery includes a positive electrode; a negative electrode; and the additive according to the present embodiments, and/or the electrolyte according to the present embodiments.

The rechargeable lithium battery of some embodiments includes the additive of the present embodiments and/or the electrolyte of the present embodiments, and may suppress or reduce the risk of ignition and/or explosion of the battery cell at high temperature, and may prevent or reduce temperature increase in the battery cell even if ignition and/or explosion begins in an adjacent battery cell.

Hereinafter, descriptions that overlap with the above will be omitted (e.g., will not be provided), and the rechargeable lithium battery will be described in more detail.

### Positive Electrode Active Material

The positive electrode active material may be a compound capable of reversibly intercalating and deintercalating lithium (a lithiated intercalation compound). For example, one or more types of composite oxides of lithium and a metal selected from among cobalt, manganese, nickel, and combinations thereof may be utilized.

The composite oxide may be a lithium transition metal composite oxide, and non-limiting examples may include lithium nickel-based oxide, lithium cobalt-based oxide, lithium manganese-based oxide, lithium iron phosphate-based compound, cobalt-free nickel-manganese-based oxide, and/or any suitable combination thereof.

As an example, the positive electrode active material may be a high nickel-based positive electrode active material having a nickel content of about 80 mol% or more based on 100 mol% of metals excluding lithium in the lithium transition metal composite oxide. The nickel content in the high nickel-based positive electrode active material may be about 85 mol% or more, about 90 mol% or more, about 91 mol% or more, or about 94 mol% or more and about 99 mol% or less based on 100 mol% of metals excluding lithium. High-nickel-based positive electrode active materials can achieve high or suitably high capacity and can be applied to a high-capacity, high-density rechargeable lithium battery.

For example, a compound represented by any of the following chemical formulae may be utilized: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤0.5, 0 < a < 2);LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{b}Co_{c}L¹_{d}GeO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8).

In the above chemical formulae, A may be Ni, Co, Mn, and/or any suitable combination thereof; X may be Al, Ni, Co, Mn, Cr, Fe, Mg, Sr, V, a rare earth element, and/or any suitable combination thereof; D may be O, F, S, P, and/or any suitable combination thereof; G may be Al, Cr, Mn, Fe, Mg, La, Ce, Sr, V, and/or any suitable combination thereof; Q may be Ti, Mo, Mn, and/or any suitable combination thereof; Z may be Cr, V, Fe, Sc, Y, and/or any suitable combination thereof; and L¹ may be Mn, Al, and/or any suitable combination thereof.

For example, the positive electrode active material may include cobalt-free lithium nickel manganese-based oxide.
As utilized herein, the cobalt-free lithium nickel manganese-based oxide as a positive electrode active material refers to a positive electrode active material composed of nickel, manganese, and/or the like as main components (e.g., major components) without cobalt in the composition of the positive electrode active material. As used herein, the term "major component" refers to a component (e.g., a metal) that is present in a composition in an amount greater than an amount of any other single component in the composition (based on the total metals excluding lithium (unless otherwise defined)). In contrast, the term "primary component" refers to a component that makes up at least 50% (wt% or at%) or more of the composition.

As an example, the cobalt-free lithium nickel manganese-based oxide may include at least one type or kind of lithium composite oxide represented by Chemical Formula 3.

Chemical Formula 3 LiₐNiₓMn_{y}M¹_{z}M²_{w}O_{2±b}X_{c}.

In Chemical Formula 3,
0.5 ≤ a < 1.8, 0 ≤ b ≤ 0.1, 0 ≤ c ≤ 0.1, 0 ≤ w < 0.1, 0.6 ≤ x < 1.0, 0 < y < 0.4, 0 < z < 0.1, w + x + y + z = 1,
M¹ and M² may each independently be one or more elements selected from among Al, Mg, Ti, Zr, Cr, Sr, V, B, W, Mo, Nb, Si, Ba, Ca, Ce, Cr, Fe and Nb, and X may be one or more elements selected from among S, F, P and Cl.

As an example, Chemical Formula 3 may be represented by Chemical Formula 3-1.

Chemical Formula 3-1 LiₐNiₓ₁Mn_{y1}Al_{z1}M²_{w1}O_{2±b}X_{c}.

In Chemical Formula 3-1,
0.5 ≤ a < 1.8, 0 ≤ b ≤ 0.1, 0 ≤ c ≤ 0.1, 0 ≤ w1 < 0.1, 0.6 ≤ x1 < 1.0, 0 < y1 < 0.4, 0 < z1 < 0.1, w1 + x1 + y1 + z1 = 1,
M² may be one or more elements selected from among Mg, Ti, Zr, Cr, Sr, V, B, W, Mo, Nb, Si, Ba, Ca, Ce, Cr, Fe and Nb, and X may be one or more elements selected from among F, P and Cl.

In Chemical Formula 3-1, x1 may be 0.6≤x1≤0.9, y1 may be 0.1≤y1≤0.4, and z1 may be 0≤z1≤0.1, or x1 may be 0.6≤x1≤0.8, y1 may be 0.2≤y1≤0.4, and z1 may be 0≤z1≤0.1.

For example, in Chemical Formula 3-1, x1 may be 0.6 ≤ x1 ≤0.79, y1 may be 0.2 ≤ y1 ≤0.39, and z1 may be 0.01 ≤ z1 < 0.1.

### Positive Electrode

The positive electrode for a rechargeable lithium battery may include a current collector and a positive electrode active material layer formed on the current collector. The positive electrode active material layer includes a positive electrode active material and may further include a binder and/or a conductive material.

A content of the positive electrode active material may be about 90 wt% to about 99.5 wt% based on 100 wt% of the positive electrode active material layer.

In some example embodiments, the positive electrode active material layer may further include a binder and a conductive material. In this case, the content of each of the binder and the conductive material may be about 0.5 wt% to about 5 wt% based on 100% by weight of the positive electrode active material layer.

The binder serves to ensure that the positive electrode active material particles adhere to each other, and also to adhere the positive electrode active material to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is utilized to impart conductivity to the electrode, and in the battery being configured, any suitable electronically conductive material can be utilized as long as it does not cause an undesirable chemical change in the battery. Examples of the conductive material may include a carbon-based material such as natural graphite, artificial graphite, carbon black, acetylene black, ketjen black, a carbon fiber, a carbon nanofiber, and/or a carbon nanotube; a metal-based material including copper, nickel, aluminum, silver, and/or the like and in the form of a metal powder and/or a metal fiber; a conductive polymer such as a polyphenylene derivative; or a mixture thereof.

The current collector may include Al, but the present disclosure is not limited thereto.

### Negative Electrode Active Material

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may be a carbon-based negative electrode active material, for example crystalline carbon, amorphous carbon and/or any suitable combination thereof. Examples of the crystalline carbon may include graphite such as irregular-shaped, plate-shaped, flake, spherical and/or fibrous natural graphite and/or artificial graphite, and examples of the amorphous carbon may include soft carbon and/or hard carbon, a mesophase pitch carbonized product, calcined coke, and/or the like.

The lithium metal alloy may include an alloy including lithium and a metal selected from among Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be utilized as a material capable of doping and dedoping lithium. The Si-based negative electrode active material may include silicon, a silicon-carbon composite, SiOx (0 < x < 2), a Si-Q alloy (wherein Q is an element selected from among an alkali metal, an alkaline earth metal, a Group 13 element, Group 14 element (excluding Si), Group 15 element, Group 16 element, a transition metal, a rare earth element, and/or any suitable combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or any suitable combination thereof), and/or any suitable combination thereof. The Sn-based negative electrode active material may be Sn, SnO₂, a Sn alloy, and/or any suitable combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be arranged between the silicon primary particles, and for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be artificial graphite, natural graphite, and/or any suitable combination thereof. The amorphous carbon may include soft carbon and/or hard carbon, a mesophase pitch carbonized product, and/or calcined coke.

If the silicon-carbon composite includes silicon and amorphous carbon, a content of silicon may be about 10 wt% to about 50 wt%, and a content of amorphous carbon may be about 50 wt% to about 90 wt% based on 100 wt% of the silicon-carbon composite. In one or more embodiments, if the composite includes silicon, amorphous carbon, and crystalline carbon, a content of silicon may be about 10 wt% to about 50 wt%, and a content of crystalline carbon may be about 10 wt% to about 70 wt%, and a content of amorphous carbon may be about 20 wt% to about 40 wt% based on 100 wt% of the silicon-carbon composite.

In some embodiments, a thickness of the amorphous carbon coating layer may be about 5 nm to about 100 nm. An average particle diameter (D₅₀) of the silicon particles (primary particles) may be about 10 nanometer (nm) to about 1 micrometer (µm), or about 10 nm to about 200 nm. The silicon particles may exist as silicon alone, in the form of a silicon alloy, and/or in an oxidized form. The oxidized form of silicon may be represented by SiOₓ (0<x<2). In this case, an atomic content ratio of Si:O, which indicates a degree of oxidation, may be about 99:1 to about 33:67. In the present specification, as utilized herein, if a definition is not otherwise provided, an average particle diameter (D₅₀) indicates a diameter of particles where an accumulated volume is about 50 vol% in a particle size distribution. The average particle size D₅₀ may be measured by a suitable technique, e.g., using a particle size analyzer, transmission electron microscope photography, and/or scanning electron microscope photography. Another method may be performed by using a measuring device with dynamic light scattering, analyzing data to count a number of particles relative to each particle size, and then calculating to obtain an average particle diameter D₅₀. In the present specification, if particles are spherical, "diameter" indicates a particle diameter, and if the particles are non-spherical, the "diameter" indicates a major axis length.

The Si-based negative electrode active material and/or the Sn-based negative electrode active material may be utilized by mixing with a carbon-based negative electrode active material. If utilizing a mixture of Si-based negative electrode active material and/or Sn-based negative electrode active material and carbon-based negative electrode active material, a mixing ratio may be about 1:99 to about 90:10 by weight.

### Negative Electrode

A negative electrode for a rechargeable lithium battery includes a current collector and a negative electrode active material layer on the current collector. The negative electrode active material layer includes a negative electrode active material and may further include a binder and/or a conductive material.

A content of the negative electrode active material may be about 95 wt% to about 99.5 wt% based on 100 wt% of the negative electrode active material layer. A content of the binder may be about 0.5 wt% to about 5 wt% based on 100 wt% of the negative electrode active material layer. A content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder serves to suitably adhere the negative electrode active material particles to each other and also helps the negative electrode active material to suitably adhere to the current collector. The binder may be a non-aqueous binder, an aqueous binder, a dry binder, and/or any suitable combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, and/or any suitable combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or any suitable combination thereof.

If an aqueous binder is utilized as the negative electrode binder, it may further include a cellulose-based compound capable of imparting suitable viscosity. As this cellulose-based compound, one or more selected from among carboxymethyl cellulose, hydroxypropylmethyl cellulose, methyl cellulose, and an alkali metal salt thereof may be utilized. The alkali metal may be Na, K, or Li.

The dry binder may be a suitable polymer material capable of being fiberized, and may be, for example, polytetrafluoroethylene, polyvinylidene fluoride, a polyvinylidene fluoride-hexafluoropropylene copolymer, polyethylene oxide, and/or any suitable combination thereof.

The conductive material is utilized to impart conductivity to the electrode, and in the battery being configured, any suitable electronically conductive material can be utilized as long as it does not cause an undesirable chemical change in the battery. Examples of the conductive material may include carbon-based materials such as natural graphite, artificial graphite, carbon black, acetylene black, ketjen black, a carbon fiber, a carbon nanofiber, and/or a carbon nanotube; a metal-based material including copper, nickel, aluminum, silver, and/or the like in the form of a metal powder and/or a metal fiber; a conductive polymer such as a polyphenylene derivative; or a mixture thereof.

The negative electrode current collector may be selected from among a copper foil, a nickel foil, a stainless steel foil, a titanium foil, a nickel foam, a copper foam, a polymer substrate coated with a conductive metal, and/or any suitable combination thereof.

### Separator

The rechargeable lithium battery may further include a separator between the negative electrode and the positive electrode, depending on a type or kind of the rechargeable lithium battery. Such a separator may be (for example, may include) polyethylene, polypropylene, polyvinylidene fluoride, and/or multi-layers thereof such as a polyethylene/polypropylene double-layered separator, a polyethylene/polypropylene/polyethylene triple-layered separator, and/or a polypropylene/polyethylene/polypropylene triple-layered separator.

The separator may include a porous substrate and a coating layer containing an organic material, an inorganic material, and/or any suitable combination thereof on one or both surfaces (e.g., opposite surfaces) of the porous substrate.

The porous substrate may be a polymer film formed of any one (e.g., one) selected from among polyolefin (such as polyethylene and/or polypropylene), polyester (such as polyethylene terephthalate and/or polybutylene terephthalate), polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., Teflon), or may be formed of a copolymer of two or more of them (thereof), and/or a mixture of two or more of them.

The porous substrate may have a thickness of about 1 µm to about 40 µm, for example about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include one or more inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or any suitable combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer or may exist in a stacked form of a coating layer including an organic material and a coating layer including an inorganic material.

A thickness of the coating layer may be each about 0.5 µm to about 20 µm, for example, about 1 µm to about 10 µm, or about 1 µm to about 5 µm.

### Rechargeable Lithium Battery

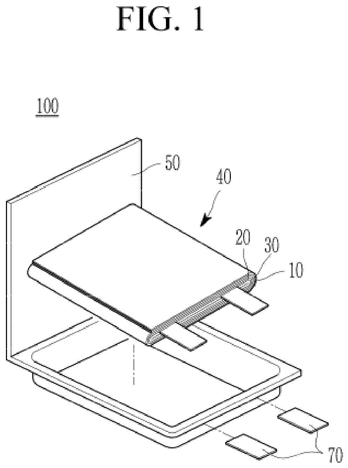

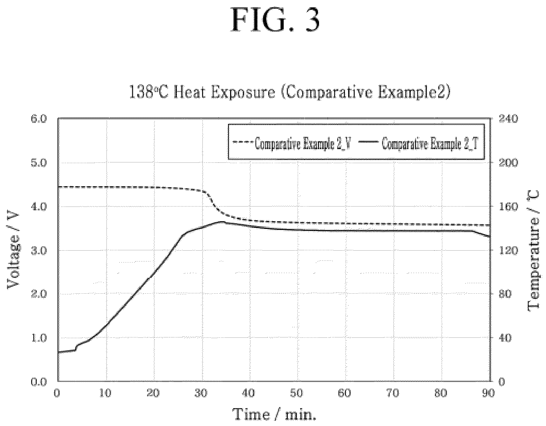

The rechargeable lithium battery may be classified into cylindrical, prismatic, pouch, coin, and/or the like depending on their shape. FIG. 1 is a schematic view showing a rechargeable lithium battery according to some example embodiments. Referring to FIGs. 1 to 3, the rechargeable lithium battery 100 includes an electrode assembly 40 including a separator 30 interposed between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as shown in FIG. 1, and may further include an electrode tab 70 that serves as an electrical path to induce the current formed in the electrode assembly 40 to the outside as shown in FIG. 3.

Hereinafter, examples and comparative examples of the present disclosure will be described. However, the following examples are only embodiments of the present disclosure, and the present disclosure is not limited to the following examples.

### Example 1

### (1) Preparation of Electrolyte

A non-aqueous organic solvent was prepared by mixing ethylene carbonate (EC), propylene carbonate (PC), ethylpropionate (EP), and propylpropionate (PP) in a volume ratio of 10:15:30:45.

To the non-aqueous organic solvent, 1.3 M of lithium salt (LiPF₆) was added, and then, as additives, 10 wt% of a first additive represented by Chemical Formula 1-1-1 (CAS No.2386-87-0) and 2 wt% of a second additive represented by Chemical Formula 2-1-1 (CAS No.110-61-2) were added to prepare an electrolyte of Example 1.

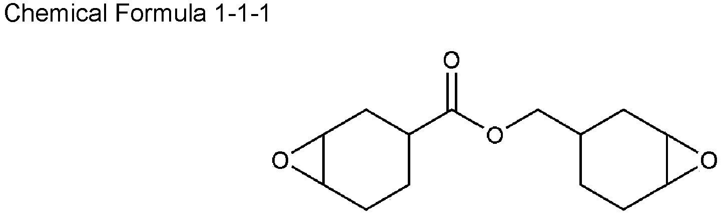

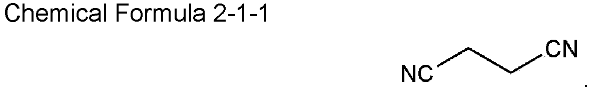

Herein, in the electrolyte composition, "wt%" is based on a total content of the electrolyte (lithium salt + non-aqueous organic solvent + additive).

### (2) Manufacturing of Rechargeable Lithium Battery Cells

LiCoO₂ as a positive electrode active material, polyvinylidene fluoride as a binder, and ketjen black as a conductive material were mixed respectively in a weight ratio of 98.5:0.75:0.75, and then, dispersed in N-methyl pyrrolidone to prepare positive electrode active material slurry.

The positive electrode active material slurry was coated on a 14 µm-thick Al foil, dried at 110 °C, and pressed to manufacture a positive electrode.

A mixture including artificial graphite and silicon particles mixed in a weight ratio of 93:7 was utilized as a negative electrode active material, and the negative electrode active material, a styrene-butadiene rubber binder, and carboxymethyl cellulose in a weight ratio of 97:1:2 were dispersed in distilled water to prepare negative electrode active material slurry.

The negative electrode active material slurry was coated on a 10 µm-thick Cu foil, dried at 100 °C, and pressed to manufacture a negative electrode.

An electrode assembly was manufactured by assembling the manufactured positive electrode and negative electrode and a 25 µm-thick polyethylene separator, the electrode assembly was accommodated in a pouch, and a rechargeable lithium battery cell was manufactured by injecting the electrolyte of the Example 1.

### Example 2

An electrolyte and a rechargeable lithium battery cell were manufactured in substantially the same manner as in Example 1 except that 10 wt% of the first additive represented by Chemical Formula 1-1-1 and 3 wt% of the second additive represented by Chemical Formula 2-2-1 (CAS No. 1772-25-4) were utilized.

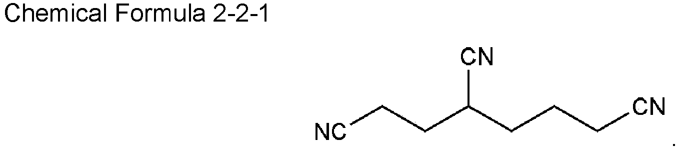

### Example 3

An electrolyte and a rechargeable lithium battery cell were manufactured in substantially the same manner as in Example 1 except that 10 wt% of the first additive represented by Chemical Formula 1-1-1 and 1 wt% of the second additive represented by Chemical Formula 2-2-1 were utilized.

### Example 4

An electrolyte and a rechargeable lithium battery cell were manufactured in substantially the same manner as in Example 1 except that 10 wt% of the first additive represented by Chemical Formula 1-1-1 and 5 wt% of the second additive represented by Chemical Formula 2-2-1 were utilized.

### Example 5

An electrolyte and a rechargeable lithium battery cell were manufactured in substantially the same manner as in Example 1 except that 5 wt% of the first additive represented by Chemical Formula 1-1-1 and 2 wt% of the second additive represented by Chemical Formula 2-2-1 were utilized.

### Example 6

An electrolyte and a rechargeable lithium battery cell were manufactured in substantially the same manner as in Example 1 except that 7 wt% of the first additive represented by Chemical Formula 1-1-1 and 2 wt% of the second additive represented by Chemical Formula 2-2-1 were utilized.

### Comparative Example 1

An electrolyte and a rechargeable lithium battery cell were manufactured in substantially the same manner as in Example 1 except that no additives were not utilized at all.

### Comparative Example 2

An electrolyte and a rechargeable lithium battery cell were manufactured in substantially the same manner as in Example 1 except that 2 wt% of the second additive represented by Chemical Formula 2-2-1, and no first additive, was utilized.

### Comparative Example 3

An electrolyte and a rechargeable lithium battery cell were manufactured in substantially the same manner as in Example 1 except that 3 wt% of the second additive represented by Chemical Formula 2-2-1, and no first additive, was utilized.

### Comparative Example 4

An electrolyte and a rechargeable lithium battery cell were manufactured in substantially the same manner as in Example 1 except that 10 wt% of the first additive represented by Chemical Formula 1-1-1, and no second additive, was utilized.

**Table 1**

| unit: wt% | | | | | |
|---|---|---|---|---|---|
| | First additive | | Second additive | | Total amount of additive (wt%) |
| | Type (or Chemical Formula) | Amount (wt%) | Type (or Chemical Formula) | Amount (wt%) | |
| Comp. Ex. 1 | - | - | - | - | - |
| Comp. Ex. 2 | - | - | Chemical Formula 2-1-1 | 2 | 2 |
| Comp. Ex. 3 | - | - | Chemical Formula 2-2-1 | 3 | 3 |
| Comp. Ex. 4 | Chemical Formula 1-1-1 | 10 | - | - | 10 |
| Example 1 | Chemical Formula 1-1-1 | 10 | Chemical Formula 2-1-1 | 2 | 12 |
| Example 2 | Chemical Formula 1-1-1 | 10 | Chemical Formula 2-2-1 | 3 | 13 |
| Example 3 | Chemical Formula 1-1-1 | 10 | Chemical Formula 2-1-1 | 1 | 11 |
| Example 4 | Chemical Formula 1-1-1 | 10 | Chemical Formula 2-1-1 | 5 | 15 |
| Example 5 | Chemical Formula 1-1-1 | 5 | Chemical Formula 2-1-1 | 2 | 7 |
| Example 6 | Chemical Formula 1-1-1 | 7 | Chemical Formula 2-1-1 | 2 | 9 |

### Evaluation Examples: Heat Exposure Evaluation

### (1) Evaluation of Heat Exposure Situation at 140 °C or 143 °C

Each of the rechargeable lithium battery cells of Comparative Examples 1, 2, and 4 and Examples 1 and 2 was evaluated with respect to heat exposure conditions.

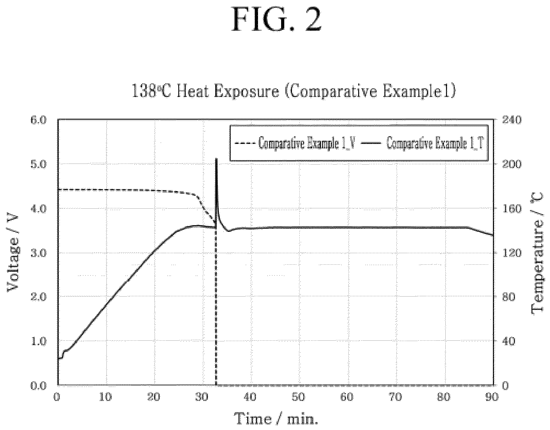

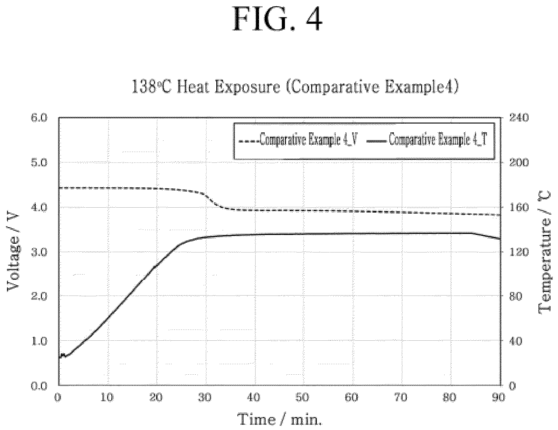

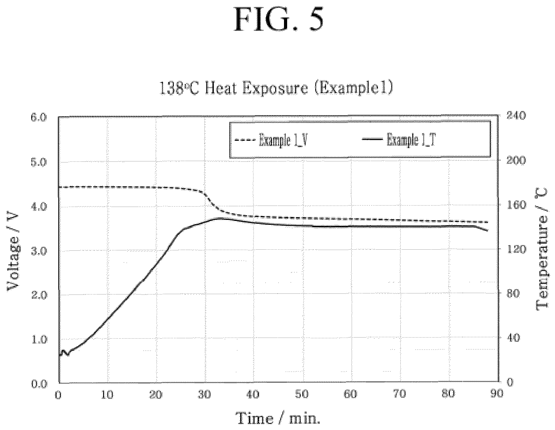

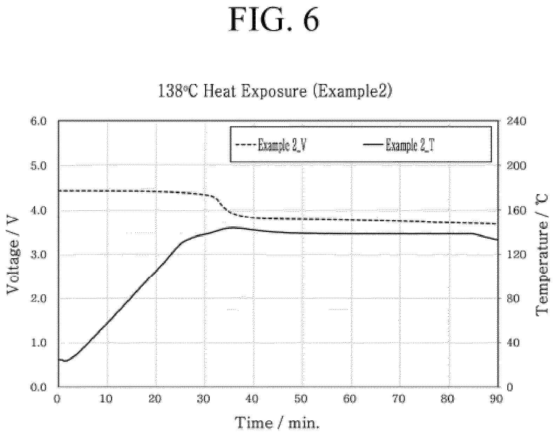

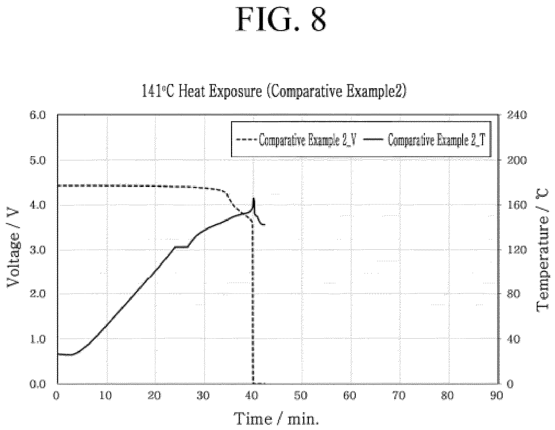

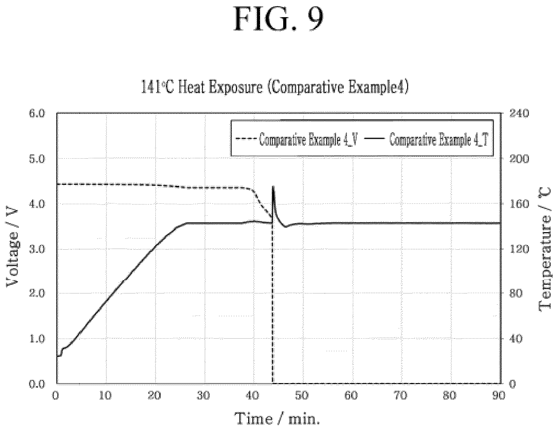

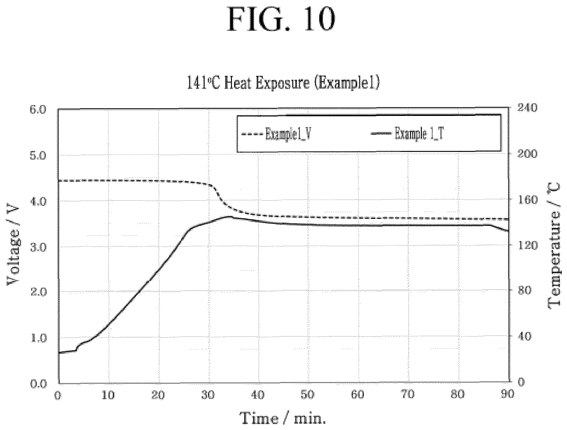

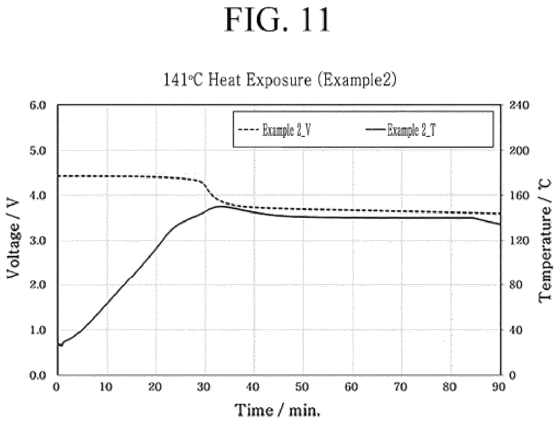

Each of the rechargeable lithium battery cells was heat-exposed by increasing a temperature from room temperature to 138 °C or 141 °C at 5 °C/min. and then, maintained at the reached temperature for 1 hour. Subsequently, a voltage (V) over time (min.) was evaluated, and the results are shown in FIGs. 2 to 11.

Referring to FIGs. 2 to 6, if each of the rechargeable lithium battery cells were exposed to heat (elevated temperature) of 138 °C, even if only one of 2 types of the additives was utilized, the temperature rise in the corresponding battery cell may still be prevented or reduced.

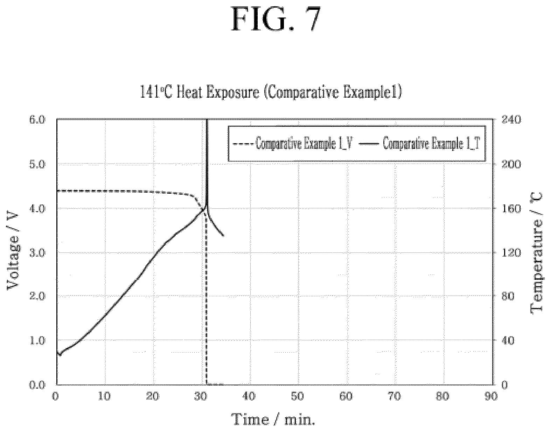

However, referring to FIGs. 7 to 11, if each of the rechargeable lithium battery cells were exposed to elevated temperature greater than 138 °C (e.g., 141 °C), only if both of the 2 types of the additive were combined, the temperature rise in the corresponding battery cell was prevented or reduced.

### (2) Heat Exposure Test-passing Temperature and Initial Resistance

Each of the rechargeable lithium battery cells according to Examples 1 to 6 and Comparative Examples 1 to 4 was evaluated with respect to a heat exposure test-passing temperature, high temperature initial resistance, and high temperature capacity retention, and the results are shown in Table 2.

Heat exposure test-passing temperature: after heating each of the lithium ion battery cells from room temperature to whatever temperature the battery cell was able to withstand without overheating (e.g., 138 °C or higher) at 5 °C/min. and allowing it to stand at the reached temperature for 1 hour, the reached temperature was evaluated as a "heat exposure test-passing temperature."

Initial resistance: each of the lithium ion battery cells was evaluated under conditions of 25 °C and SOC 100 (state of charge 100%) in a DC resistance method.

**Table 2**

| | Heat exposure test passing temperature (°C) | Initial resistance @ SOC100% (mΩ) |
|---|---|---|
| Comparative Example 1 | 136 | 32 |
| Comparative Example 2 | 138 | 33 |
| Comparative Example 3 | 138 | 33 |
| Comparative Example 4 | 138 | 37 |
| Example 1 | 142 | 39 |
| Example 2 | 142 | 40 |
| Example 3 | 141 | 39 |
| Example 4 | 143 | 42 |
| Example 5 | 141 | 37 |
| Example 6 | 141 | 38 |

### (3) Summary

Referring to Table 2, if only one type out of the two types of the additives of the present embodiments was utilized, the battery cell could withstand elevated temperature of (just or at most)138 °C, but if both of the 2 types of additives were combined, the battery cell could withstand elevated temperature of greater than 138 °C (e.g., 141 °C).

Further, if2 types of the additives were combined, comprehensively considering the high temperature initial resistance, a desirable or suitable content of each of the additives and a desirable or suitable total content of the additives was observed.

For example, based on a total amount of the electrolyte, the first additive may be utilized in an amount of 5 wt% to 10 wt%, and the second additive may be utilized in an amount of 1 wt% to 5 wt%.

### Reference Numerals

100: rechargeable lithium battery
10: positive electrode
20: negative electrode
30: separator
40: electrode assembly
50: case
70: electrode tab

## Claims

1. An electrolyte for a rechargeable lithium battery (100), the electrolyte comprising:
a non-aqueous organic solvent;
a lithium salt;
a first additive represented by Chemical Formula 1; and
a second additive being a nitrile-based additive: 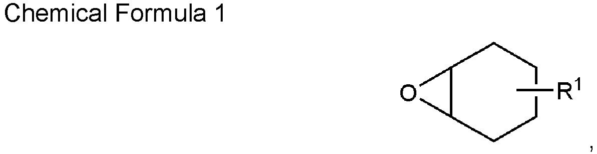
in Chemical Formula 1,
R¹ is a C1 to C10 alkyl group, a C3 to C10 cycloalkyl group, a C2 to C20 heterocycloalkyl group comprising a heteroatom of at least one of N, O, S, or P, a substituted or unsubstituted C6 to C20 aryl group, a substituted or unsubstituted C2 to C10 heteroaryl group comprising a heteroatom of at least one of N, O, S, or P, or *-(L¹)-(L²)-R²;
L¹ is a single bond, or *-(C=O)-O-*;
L² is a single bond, or a C1 to C10 alkylene group; and
R² is a hydrogen atom, or a substituent represented by Chemical Formula A: 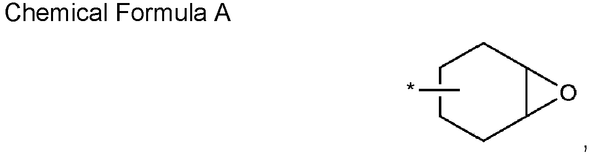
wherein "substituted" refers to replacement of at least one hydrogen of a compound by a halogen atom, a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, and a C2 to C20 heterocycloalkynyl group.

2. The electrolyte as claimed in claim 1, wherein Chemical Formula 1 is represented by Chemical Formula 1-1 or Chemical Formula 1-2: 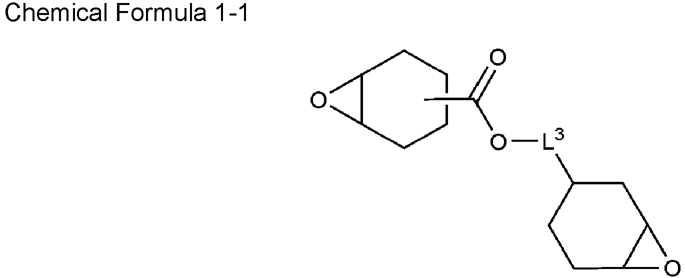 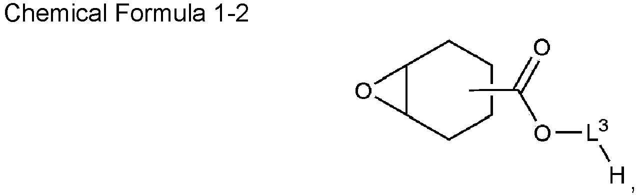 in Chemical Formulae 1-1 and 1-2,
L³ is a C1 to C10 alkylene group.

3. The electrolyte as claimed in claim 1, wherein
the first additive comprises at least one compound selected from the group consisting of:

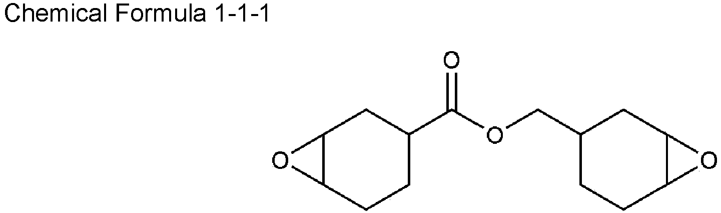

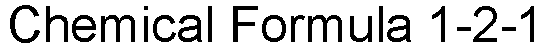

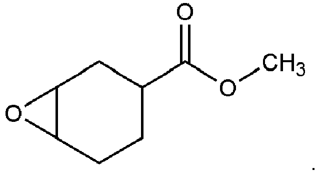

4. The electrolyte as claimed in any one of the preceding claims, wherein the second additive comprises one or more multifunctional nitrile compounds comprising two or more nitrile groups.

5. The electrolyte as claimed in claim 4, wherein the second additive is represented by Chemical Formula 2:
Chemical Formula 2 NC-(L³)ₐ-(L⁴)_{b}-CN,
in Chemical Formula 2,
L³ and L⁴ are each independently an unsubstituted C1 to C10 alkoxy group, an unsubstituted C1 to C10 alkylene group, or a C1 to C10 alkylene group substituted with a cyano group (-CN); and
a and b are each independently integers ranging from 0 to 3.

6. The electrolyte as claimed in claim 5, wherein Chemical Formula 2 is represented by Chemical Formula 2-1 or Chemical Formula 2-2:
Chemical Formula 2-1 NC-(L⁵)_{c}-(L⁶)_{d}-CN 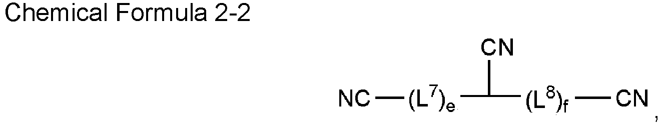
in Chemical Formulas 2-1 and 2-2,
L⁵ to L⁸ are each independently an unsubstituted C1 to C10 alkoxy group, or an unsubstituted C1 to C10 alkylene group; and
c to f are each independently integers ranging from 0 to 3.

7. The electrolyte as claimed in claim 6, wherein the second additive comprises at least one compound selected from among Chemical Formula 2-1-1, Chemical Formula 2-1-2, and Chemical Formula 2-2-1:

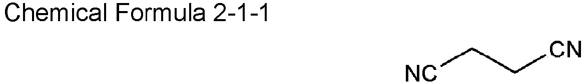

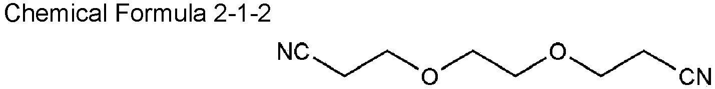

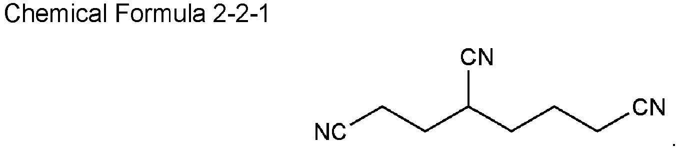

8. The electrolyte as claimed in any one of the preceding claims, wherein a weight ratio of the first additive and the second additive is 1:1 to 20:1.

9. The electrolyte as claimed in any one of the preceding claims, wherein the first additive is in an amount of 1 wt% to 20 wt% based on a total amount of the electrolyte.

10. The electrolyte as claimed in any one of the preceding claims, wherein the second additive is in an amount of 0.1 wt% to 10 wt% based on a total amount of the electrolyte.

11. The electrolyte as claimed in any one of the preceding claims, wherein the non-aqueous organic solvent comprises a carbonate-based solvent, an ester-based solvent, or a combination thereof.

12. The electrolyte as claimed in claim 11, wherein the non-aqueous organic solvent comprises ethylene carbonate (EC), propylene carbonate (PC), ethyl propionate (EP), and propyl propionate (PP).

13. A rechargeable lithium battery (100), comprising:
a positive electrode (10) comprising a positive electrode active material;
a negative electrode (20) comprising a negative electrode active material; and
the electrolyte as claimed in claim 1.

## Patentansprüche

1. Elektrolyt für eine wiederaufladbare Lithiumbatterie (100), wobei der Elektrolyt umfasst:
ein nicht wässriges organisches Lösungsmittel;
ein Lithiumsalz;
ein erstes Additiv, das durch die chemische Formel 1 dargestellt wird; und
ein zweites Additiv, das ein Additiv auf Nitrilbasis ist: 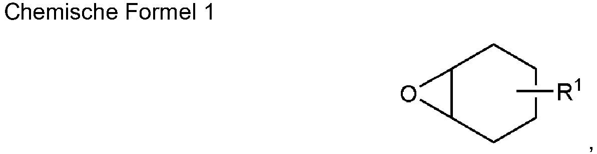
wobei in der chemischen Formel 1
R¹ eine C1- bis C10-Alkylgruppe, eine C3- bis C10-Cycloalkylgruppe, eine C2- bis C20-Heterocycloalkylgruppe, die ein Heteroatom aus mindestens einem von N, O, S oder P enthält, eine substituierte oder unsubstituierte C6- bis C20-Arylgruppe, eine substituierte oder unsubstituierte C2- bis C10-Heteroarylgruppe, die ein Heteroatom aus mindestens einem von N, O, S oder P enthält, oder *-(L¹)-(L²)-R² ist;
L¹ eine Einfachbindung oder *-(C=O)-O-* ist;
L² eine Einfachbindung oder eine C1- bis C10-Alkylengruppe ist; und
R² ein Wasserstoffatom oder ein Substituent, der durch die chemische Formel A dargestellt wird, ist: 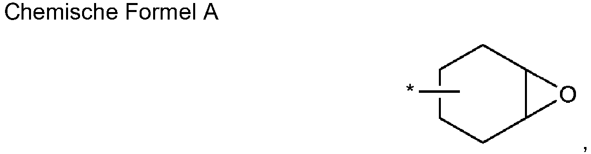 wobei sich "substituiert" auf den Ersatz mindestens eines Wasserstoffs einer Verbindung durch ein Halogenatom, eine Hydroxygruppe, eine C1- bis C20-Alkoxygruppe, eine Nitrogruppe, eine Cyanogruppe, eine Amingruppe, eine Iminogruppe, eine Azidogruppe, eine Amidinogruppe, eine Hydrazinogruppe, eine Hydrazonogruppe, eine Carbonylgruppe, eine Carbamylgruppe, eine Thiolgruppe, eine Estergruppe, eine Ethergruppe, eine Carboxylgruppe oder ein Salz davon,
eine Sulfonsäuregruppe oder ein Salz davon, eine Phosphorsäure oder ein Salz davon, eine C1-bis C20-Alkylgruppe, eine C2- bis C20-Alkenylgruppe, eine C2- bis C20-Alkinylgruppe, eine C6-bis C30-Arylgruppe, eine C3- bis C20-Cycloalkylgruppe, eine C3- bis C20-Cycloalkenylgruppe,
eine C3- bis C20-Cycloalkinylgruppe, eine C2- bis C20-Heterocycloalkylgruppe, eine C2- bis C20-Heterocycloalkenylgruppe und eine C2- bis C20-Heterocycloalkinylgruppe bezieht.

2. Elektrolyt nach Anspruch 1, wobei die chemische Formel 1 durch die chemische Formel 1-1 oder die chemische Formel 1-2 dargestellt wird: 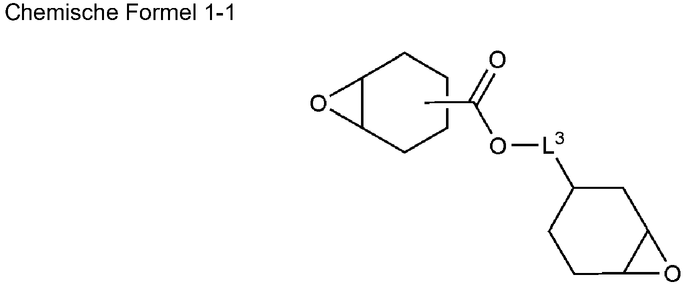 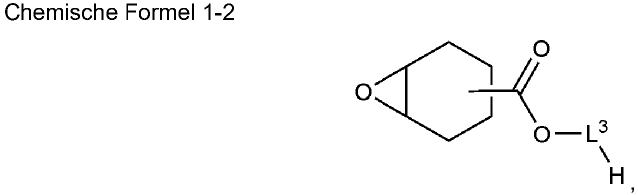 wobei in den chemischen Formeln 1-1 und 1-2,
L³ eine C1- bis C10-Alkylengruppe ist.

3. Elektrolyt nach Anspruch 1, wobei
das erste Additiv mindestens eine Verbindung umfasst, die ausgewählt ist aus der Gruppe bestehend aus:

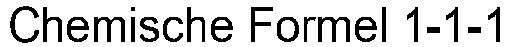

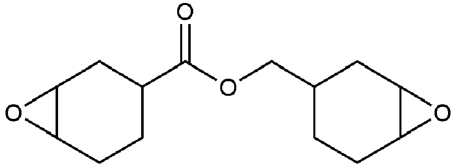

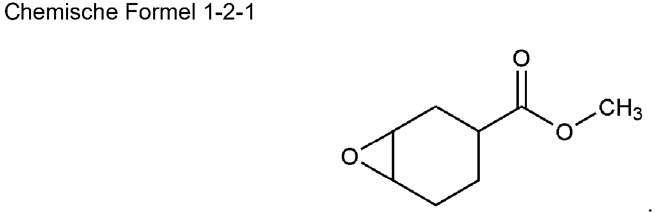

4. Elektrolyt nach einem der vorhergehenden Ansprüche, wobei das zweite Additiv eine oder mehrere multifunktionelle Nitrilverbindungen umfasst, die zwei oder mehr Nitrilgruppen enthalten.

5. Elektrolyt nach Anspruch 4, wobei das zweite Additiv durch die chemische Formel 2 dargestellt ist:
Chemische Formel 2 NC-(L³)ₐ-(L⁴)_{b}-CN,
wobei in der chemischen Formel 2
L³ und L⁴ jeweils unabhängig voneinander eine unsubstituierte C1- bis C10-Alkoxygruppe, eine unsubstituierte C1- bis C10-Alkylengruppe oder eine mit einer Cyanogruppe (-CN) substituierte C1- bis C10-Alkylengruppe sind; und
a und b jeweils unabhängig voneinander ganze Zahlen im Bereich von 0 bis 3 sind.

6. Elektrolyt nach Anspruch 5, wobei die chemische Formel 2 durch die chemische Formel 2-1 oder die chemische Formel 2-2 dargestellt wird:
Chemische Formel 2-1 NC-(L⁵)_{c}-(L⁶)_{d}-CN 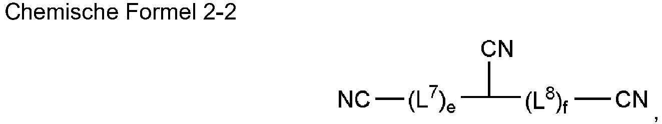
wobei in den chemischen Formeln 2-1 und 2-2
L⁵ bis L⁸ jeweils unabhängig voneinander eine unsubstituierte C1- bis C10-Alkoxygruppe oder
eine unsubstituierte C1- bis C10-Alkylengruppe sind; und
c bis f jeweils unabhängig voneinander ganze Zahlen im Bereich von 0 bis 3 sind.

7. Elektrolyt nach Anspruch 6, wobei das zweite Additiv mindestens eine Verbindung umfasst, die unter der chemischen Formel 2-1-1, der chemischen Formel 2-1-2 und der chemischen Formel 2-2-1 ausgewählt ist:

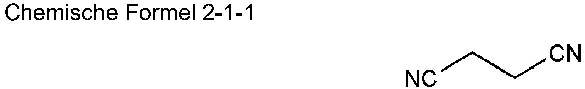

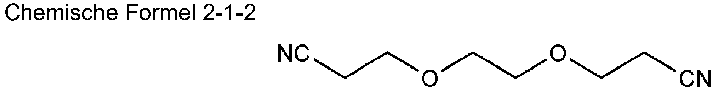

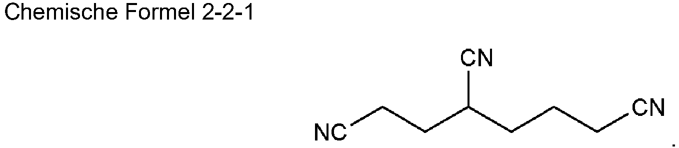

8. Elektrolyt nach einem der vorhergehenden Ansprüche, wobei ein Gewichtsverhältnis des ersten Additivs und des zweiten Additivs 1:1 bis 20:1 beträgt.

9. Elektrolyt nach einem der vorhergehenden Ansprüche, wobei das erste Additiv in einer Menge von 1 Gew.-% bis 20 Gew.-%, basierend auf einer Gesamtmenge des Elektrolyten, vorliegt.

10. Elektrolyt nach einem der vorhergehenden Ansprüche, wobei das zweite Additiv in einer Menge von 0,1 Gew.-% bis 10 Gew.-%, basierend auf einer Gesamtmenge des Elektrolyten, vorliegt.

11. Elektrolyt nach einem der vorhergehenden Ansprüche, wobei das nicht wässrige organische Lösungsmittel ein Lösungsmittel auf Carbonatbasis, ein Lösungsmittel auf Esterbasis oder eine Kombination daraus umfasst.

12. Elektrolyt nach Anspruch 11, wobei das nicht wässrige organische Lösungsmittel Ethylencarbonat (EC), Propylencarbonat (PC), Ethylpropionat (EP) und Propylpropionat (PP) umfasst.

13. Wiederaufladbare Lithiumbatterie (100), umfassend:
eine positive Elektrode (10), die ein Aktivmaterial für die positive Elektrode umfasst;
eine negative Elektrode (20), die ein Aktivmaterial für die negative Elektrode umfasst; und
den Elektrolyt nach Anspruch 1.

## Revendications

1. Électrolyte pour une batterie rechargeable au lithium (100), l'électrolyte comportant
un solvant organique non aqueux ;
un sel de lithium ;
un premier additif représenté par la Formule chimique 1 ; et
un second additif étant un additif à base de nitrile : 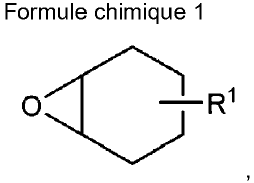
dans la Formule chimique 1,
R¹ est un groupe alkyle en C1 à C10, un groupe cycloalkyle en C3 à C10, un groupe hétérocycloalkyle en C2 à C20 comportant un hétéroatome d'au moins l'un parmi N, O, S, ou P, un groupe aryle en C6 à C20 substitué ou non substitué, un groupe hétéroaryle en C2 à C10 substitué ou non substitué comportant un hétéroatome d'au moins l'un parmi N, O, S, ou P, ou *-(L¹)-(L²)-R² ;
L¹ est une liaison unique, ou *-(C=O)-O-* ;
L² est une liaison unique, ou un groupe alkylène en C1 à C10 ; et
R² est un atome d'hydrogène, ou un substituant représenté par la Formule chimique A : 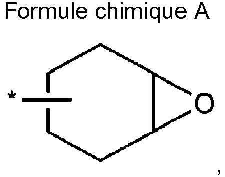
dans lequel « substitué » désigne le remplacement d'au moins un hydrogène d'un composé par un atome d'halogène, un groupe hydroxy, un groupe alcoxy en C1 à C20, un groupe nitro, un groupe cyano, un groupe amine, un groupe imino, un groupe azide, un groupe amidino, un groupe hydrazino, un groupe hydrazono, un groupe carbonyle, un groupe carbamyle, un groupe thiol, un groupe ester, un groupe éther, un groupe carboxyle ou un sel de celui-ci, un groupe acide sulfonique ou un sel de celui-ci,
un acide phosphorique ou un sel de celui-ci, un groupe alkyle en C1 à C20, un groupe alcényle en C2 à C20, un groupe alkynyle en C2 à C20, un groupe aryle en C6 à C30, un groupe cycloalkyle en C3 à C20, un groupe cycloalcényle en C3 à C20, un groupe cycloalkynyle en C3 à C20, un groupe hétérocycloalkyle en C2 à C20, un groupe hétérocycloalcényle en C2 à C20 et un groupe hétérocycloalkynyle en C2 à C20.

2. Électrolyte selon la revendication 1, dans lequel la Formule chimique 1 est représentée par la Formule chimique 1-1 ou la Formule chimique 1-2 : 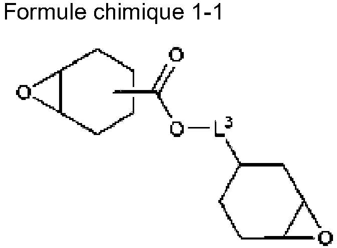 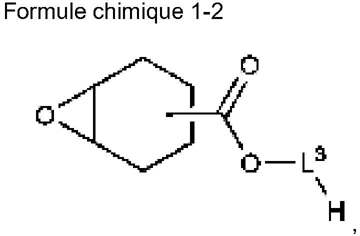 dans les Formules chimiques 1-1 et 1-2,
L³ est un groupe alkylène en C1 à C10.

3. Électrolyte selon la revendication 1, dans lequel le premier additif comporte au moins un composé choisi dans le groupe constitué de :

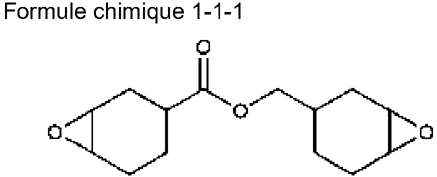

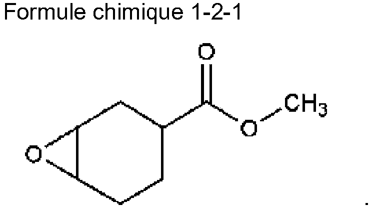

4. Électrolyte selon l'une quelconque des revendications précédentes, dans lequel le second additif comporte un ou plusieurs composés nitrile multifonctionnels comportant deux groupes nitrile ou plus.

5. Électrolyte selon la revendication 4, dans lequel le second additif est représenté par la Formule chimique 2 :
Formule chimique 2 NC-(L³)ₐ-(L⁴)_{b}-CN,
dans la Formule chimique 2,
L³ et L⁴ sont chacun indépendamment un groupe alcoxy en C1 à C10 non substitué, un groupe alkylène en C1 à C10 non substitué, ou un groupe alkylène en C1 à C10 substitué par un groupe cyano (-CN) ; et
a et b sont chacun indépendamment des nombres entiers allant de 0 à 3.

6. Électrolyte selon la revendication 5, dans lequel la Formule chimique 2 est représentée par la Formule chimique 2-1 ou la Formule chimique 2-2 :
Formule chimique 2-1 NC-(L⁵)_{c}-(L⁶)_{d}-CN 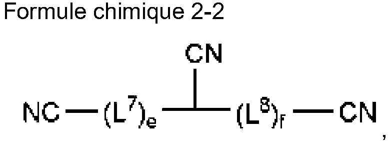
dans les Formules chimiques 2-1 et 2-2,
L⁵ à L⁸ sont chacun indépendamment un groupe alkoxy en C1 à C10 non substitué, ou un groupe alkylène en C1 à C10 non substitué ; et
c à f sont chacun indépendamment des entiers allant de 0 à 3.

7. Électrolyte selon la revendication 6, dans lequel le second additif comporte au moins un composé choisi parmi la formule chimique 2-1-1, la formule chimique 2-1-2 et la formule chimique 2-2-1 :

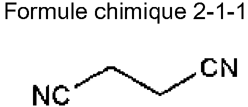

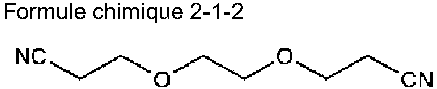

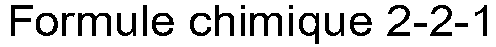

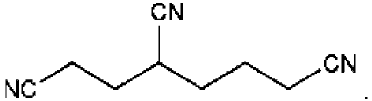

8. Électrolyte selon l'une quelconque des revendications précédentes, dans lequel un rapport pondéral entre le premier additif et le second additif est de 1:1 à 20:1.

9. Électrolyte selon l'une quelconque des revendications précédentes, dans lequel le premier additif est en une quantité de 1 % en poids à 20 % en poids par rapport à une quantité totale de l'électrolyte.

10. Électrolyte selon l'une quelconque des revendications précédentes, dans lequel le second additif est en une quantité de 0,1 % en poids à 10 % en poids par rapport à une quantité totale de l'électrolyte.

11. Électrolyte selon l'une quelconque des revendications précédentes, dans lequel le solvant organique non aqueux comporte un solvant à base de carbonate, un solvant à base d'ester, ou une combinaison de ceux-ci.

12. Électrolyte selon la revendication 11, dans lequel le solvant organique non aqueux comporte du carbonate d'éthylène (EC), du carbonate de propylène (PC), du propionate d'éthyle (EP) et du propionate de propyle (PP).

13. Batterie rechargeable au lithium (100), comportant :
une électrode positive (10) comportant un matériau actif d'électrode positive ;
une électrode négative (20) comportant un matériau actif d'électrode négative ; et
l'électrolyte selon la revendication 1.
